(19) Europäisches Patentamt
European Patent Office
Office européen des brevets

(11) Publication number: 0 294 179 A2

# (12) EUROPEAN PATENT APPLICATION

(21) Application number: **88305007.2**

(22) Date of filing: **01.06.88**

(51) Int. Cl.4: **C 08 L 67/02**
C 08 K 5/29, C 08 L 71/00

(30) Priority: **02.06.87 US 57174**

(43) Date of publication of application:
**07.12.88 Bulletin 88/49**

(84) Designated Contracting States:
**AT BE CH DE ES FR GB GR IT LI LU NL SE**

(71) Applicant: **HOECHST CELANESE CORPORATION**
**Route 202-206 North**
**Somerville, N.J. 08876 (US)**

(72) Inventor: **Golder, Michael D.**
**38 Harreton Road**
**Allendale New Jersey (US)**

(74) Representative: **De Minvielle-Devaux, Ian Benedict Peter et al**
**CARPMAELS & RANSFORD 43, Bloomsbury Square**
**London WC1A 2RA (GB)**

Claims for the following Contracting State: GR.

(54) **Blend of copolyester elastomer and carbodiimide.**

(57) Elastomeric compositions having resistance to hot grease aging are made from a blend of a thermoplastic copolyester elastomer and carbodiimide, with or without phenoxy resin.

EP 0 294 179 A2

**Description**

## Blends of Copolyester Elastomers and Carbodiimide

### Background of the Invention

The field of art to which this invention is directed is modified thermoplastic copolyester elastomers.

Segmented thermoplastic copolyester elastomers, which contain recurring polymeric long chain ester units derived from phthalic acids and long chain glycols and short chain ester units derived from phthalic acids and short chain glycols, are described in such patent as U.S. 3,651,014, 3,763,109 and 4,355,155.

U.S. Patent No. 3,835,098 describes a process for improving the thermal and hydrolytic stability of copolyester elastomers by reacting the elastomer with substantially linear polycarbodiimides having an average of at least two carbodiimide groups per molecule.

Thermoplastic copolyester elastomer compositions having superior melt stability are described in U.S. Patent No. 3,723,568. The improved stability is obtained by blending the elastomer with low molecular weight epoxides having functionalities of not less than two.

Blends of copolyester elastomers, ethylene/carboxylic acid copolymers and polycarbodiimides are described in U.S. Patent No. 3,963,801.

In many applications, e.g., constant velocity boots used in front-wheel drive automobiles, there is a need for elastomeric compositions which can stand extended contact with hot grease without losing strength and elastomeric properties.

### Summary of Invention

This invention is directed to thermoplastic copolyester elastomer compositions having improved resistance to hot grease. In one aspect, this invention relates to thermoplastic copolyester elastomer - carbodiimide blends. In another aspect, this invention pertains to thermoplastic copolyester elastomer -carbodiimide blends further modified with phenoxy resins.

The compositions of this invention are made from a blend of (A) about 70 to about 99.5 weight percent thermoplastic copolyester elastomer; (B) about 0.5 to about 5 weight percent carbodiimide and (C) 0 to about 25 weight percent phenoxy resin, wherein said weight percentages are based on the total weight of (A), (B) and (C). The thermoplastic copolyester elastomer, which is also referred to as a segmented copolyester elastomer, is comprised of a multiplicity of recurring long chain ester units and short chain ester units joined head to tail through ester linkages. The long chain ester units are represented by the formula:

$$-OGO-\overset{O}{\overset{\|}{C}}\,R\,\overset{O}{\overset{\|}{C}}-$$

and the short chain ester units are represented by the formula:

$$-ODO-\overset{O}{\overset{\|}{C}}\,R\,\overset{O}{\overset{\|}{C}}-$$

wherein G is a divalent radical remaining after the removal of the terminal hydroxyl groups from a polyether glycol having a molecular weight in the range from about 400 to about 6,000,R is a hydrocarbon radical remaining after removal of the carboxyl groups from terephthalic acid or isophthalic acid and D is a divalent radical remaining after removal of hydroxyl groups from 1,4-butanediol and/or 1,4-butenediol. The short chain ester units make up about 30 to about 85 weight percent of the copolyester.

### Description of the Invention

The thermoplastic copolyester elastomers useful in this invention are described in detail in U.S. Patent No. 4,355,155, which is hereby incorporated by reference. These elastomers are made up of a multiplicity of recurring long chain ester units and short chain ester units joined head to tail through ester linkages, said long chain ester units being represented by the formula:

$$-OGO-\overset{O}{\overset{\|}{C}}\,R\,\overset{O}{\overset{\|}{C}}-$$

and said short chain units being represented by the formula:

$$-ODO-\overset{O}{\overset{\|}{C}}\,R\,\overset{O}{\overset{\|}{C}}-$$

wherein G is divalent radical remaining after the removal of the terminal hydroxyl groups from a polyether glycol, wherein R is a hydrocarbon radical remaining after removal of the carboxyl groups from terephthalic acid or isophthalic acid and wherein D is a divalent radical remaining after removal of hydroxyl groups from 1,4-butanediol and/or 1,4-butenediol.

The short chain segments in the elastomer amount to between about 30 percent and about 85 percent,

preferably about 45 percent to about 65 percent by weight, of the copolyester. Preferably between about 10 percent and about 40 percent, most preferably about 20 percent to about 30 percent, of the D groups represent divalent radicals remaining after removal of hydroxyl groups from 1,4-butenediol.

The long chain polyether glycols used to make the copolyester elastomers have a molecular weight between about 400 and about 6,000. Such polyether glycols are polyoxyalkylene glycols wherein the alkylene groups contain 2 to 4 carbon atoms. Examples of such polyether glycols are polyoxyethylene glycols, polyoxypropylene glycols, polyoxybutylene glycols, polyoxytetramethylene glycols and block and random copolymers containing oxyethylene and oxypropylene groups. A preferred polyether glycol is polyoxytetramethylene glycol which is derived from tetrahydrofuran. A particularly preferred polyoxytetramethylene glycol is one having an average molecular weight of about 1,000.

Terephthalic acid, or its esters, is the preferred acid for use in making the copolyester elastomers. However, mixtures of terephthalic acid and isophthalic acid wherein about 1 percent to about 20 percent by weight of the mixture is isophthalic acid are used when products of lower flexural modulus are desired.

Carbodiimide (HN=C=NH) is a crystalline compound having a melting point of 42° C. Carbodiimide can be used in this invention in its crystalline form, or as a heated liquid, or can be used in a carrier resin. Examples of such carrier resins are polyethylene, polypropylene and various olefinic copolymers.

"Phenoxy resins" is the generic term used to describe the amorphous, high molecular weight poly(hydroxy ethers) derived from diphenols and epichlorohydrin. Phenoxy resins useful in this invention are the high molecular weight reaction products of Bisphenol A and epichlorohydrin. Such poly(hydroxy ether) reaction products have molecular weights which range from about 10,000 to about 35,000. Phenoxy resins are described in detail in "Encyclopedia of Polymer Science and Technology", Volume 10, pages 111-122 (1969) which is hereby incorporated by reference. Also included in the definition of phenoxy resins as used in this invention are the reaction products of Bisphenol A and epichlorohydrin which have molecular weights as low as about 5000. Such resins are sold commercially by Shell Chemical Company as Epon 1009 and 1010 and by Interez, Inc. as Epi-Rez 550 and 560. Phenoxy resins useful in this invention have molecular weights of about 5000 to about 35,000.

The compositions of this invention are made from a blend of (A) the thermoplastic polyester elastomer and (B) carbodiimide with or without (C) phenoxy resin. The compositions contain: about 70 to about 99.5 weight percent thermoplastic copolyester elastomer and, preferably, about 76.5 to about 99.5 weight percent; about 0.5 to about 5 weight percent carbodiimide and, preferably about 0.5 to about 3.5 weight percent; and 0 to about 25 weight percent phenoxy resin and, preferably, 0 to about 20 weight percent. The weight percents are based on the total weight of (A), (B) and (C).

The copolyester elastomer, the carbodiimide and the phenoxy resin, if used, are tumble blended, followed by melt compounding on single screw or thin screw extruders. The blended compositions are then extruded in sheet form.

The following examples will describe the invention in more detail. Parts and percentages unless otherwise designated are parts and percentages by weight.

Example A

The composition data and physical properties of the copolyester elastomers used in the examples are as follows:

Table A

| Copolyester | A | B | C |
|---|---|---|---|
| Shore D Hardness | 47 | 55 | 47 |
| Wt % Hard Segment | 53 | 62 | 53 |
| Wt % Soft Segment | 47 | 38 | 47 |
| Melting point °C | | | |
| of Hard Segment | 208 | 208 | 208 |
| of Soft Segment | 178 | 184 | 178 |
| Melt Index (220°C | | | |
| and 2160 Cm) | 6.0 | 6.0 | 11.5 |
| Inherent Viscosity | 1.35 | 1.35 | 1.0 |

All of the copolyesters contained both 1,4-butenediol (B2D) and 1,4-butenediol (B1D) in the hard segments in a mole ratio of B2D/(B1D + B2D) = 0.25.
The copolyesters are stabilized with 1.75 weight percent of an amine antioxidant.

Example 1

The copolyester elastomers described in Example A were tumble blended with carbodiimide, were melt compounded on a one inch single screw extruder at 420°F and at 80 RPM and were extruded in sheet form. Resistance to hot grease aging was determined on ASTM D412 tensile bars stamped from the extruded sheets. The tensile bars were placed in jars filled with grease used in the front wheel drive systems of automobiles and were placed in ovens heated at 100°C for the times indicated in Table 1. The tensile strength at break (TS-BK) and the tensile elongation at break (ELONG-BK) were determined on the tensile bars before aging and after aging. The percent retention of these properties was then calculated. The amount of each component in the blend and the strength retention properties are listed in Table 1.

Table 1

| Example | 1a | 1b | 1c | 1d | 1e |
|---|---|---|---|---|---|
| Copolyester A % | 100 | 97.5 | | | |
| Copolyester B % | | | 100 | 99.5 | 98 |
| Carbodiimide % | | 2.5 | | 0.5 | 2 |
| 3 Weeks | | | | | |
| % Retention-TS-BK | 48 | 55 | 41 | 58 | |
| % Retention-Elong-Bk | 13 | 79 | 66 | 81 | |
| 4 Weeks | | | | | |
| % Retention-TS-BK | | | 41 | | 62 |
| % Retention-Elong-BK | | | 24 | | 79 |
| 6 Weeks | | | | | |
| % Retention-TS-BK | 42 | 44 | 41 | 38 | 46 |
| % Retention-Elong-BK | 4 | 13.5 | 13 | 21 | 65 |

Example 2

Blends were made from copolyester elastomer and carbodiimide, copolyester elastomer and phenoxy resins, and copolyester elastomer, carbodiimide and phenoxy resin (UCAR PKFE - Union Carbide Corporation) using the procedure described in Example 1. The resistance to aging in 100°C grease was then determined as described in Example 1. The composition data and aging results are listed in Table 2.

Table 2

| Example | 2a | 2b | 2c | 2d |
|---|---|---|---|---|
| Copolyester B % | 100 | 98 | 85 | 83 |
| Carbodiimide % | | 2 | 15 | 2 |
| Phenoxy Resin % | | | | 15 |
| 6 Weeks | | | | |
| % Retention-TS-BK | 41 | 46 | 54 | 60 |
| % Retention-Elong-BK | 12 | 65 | 32 | 89 |

Example 3

Blends were prepared from copolyester elastomer, carbodiimide and phenoxy resin (UCAR PKFE) using the procedure described in Example 1. The carbodiimide used in this example was introduced in admixture with polypropylene. The compositional data and aging results are listed in Table 3.

Table 3

| Example | 3a | 3b | 3c | 3d | 3e | 3f |
| --- | --- | --- | --- | --- | --- | --- |
| Copolyester B % | 88 | 85.1 | 86.9 | 91.3 | 90.5 | 93.2 |
| Carbodiimide % | 2 | 2.6 | 0.5 | 0.5 | 1.8 | 3.1 |
| Phenoxy Resin % | 10 | 9.5 | 9.7 | 4.8 | 4.8 | 1.0 |
| Polypropylene | | 2.8 | 2.9 | 3.4 | 2.9 | 2.7 |
| 6 Weeks | | | | | | |
| % Retention-TS-BK | 51 | 78 | 48 | 41 | 44 | 71 |
| % Retention-Elong-BK | 89 | 105 | 49 | 27 | 68 | 105 |

## Example 4

Blends were prepared from copolyester elastomer, carbodiimide and either phenoxy resin (USAR PKFE) or epoxy resin (EPON 1009 - Shell Chemical Company). The compositional data and aging resistance are listed in Table 4.

Table 4

| Example | 4a | 4b | 4c | 4d | 4e |
|---|---|---|---|---|---|
| Copolyester A % | 100 | 87.75 | 82.6 | 77.65 | 97.5 |
| Carbodiimide % | | 2.55 | 2.0 | 2.35 | 2.5 |
| Phenoxy Resin % | | 9.7 | | | |
| Epoxy Resin % | | | 15.4 | 20 | |
| 6 Weeks | | | | | |
| % Retention-TS-BK | 42 | 44 | 49 | 64 | 44 |
| % Retention-Elong-BK | 4 | 30 | 32 | 34 | 13.5 |

As can be seen from these data listed in Tables 2-5, the resistance of copolyester elastomers is dramatically increased by the incorporation by blending of carbodiimide either alone or in admixture with phenoxy resins which includes by definition epoxy resins having molecular weights of about 5000.

The principals, preferred embodiments and modes of operation of the present invention have been described in the foregoing specification. The invention which is intended to be protected herein, however, is not to be construed as limited to the particular forms disclosed, since these are to be regarded as illustrating rather than restrictive. Variations and changes may be made by those skilled in the art without departing form the spirit of the invention.

**Claims**

1. An elastomeric composition comprising a blend of:

(A) 70 to about 99.5 percent thermoplastic copolyester elastomer;

(B) 0.5 to 5 weight percent carbodiimide; and, optionally,

(C) 0 to 25 weight percent phenoxy resin, said weight percents being based on the total weight of (A), (B) and (C), wherein the copolyester elastomer comprises a multiplicity of recurring long chain ester units and short chain ester units joined head to tail through ester linkages, said long chain units being represented by the formula:

$$-OGO\overset{O}{\overset{\|}{C}}R\overset{O}{\overset{\|}{C}}-$$

and said short chain units being represented by the formula:

$$-ODO-\overset{O}{\overset{\|}{C}}R\overset{O}{\overset{\|}{C}}-$$

wherein G. is a divalent radical remaining after the removal of the terminal hydroxyl groups from a polyether glycol having molecular weight in the range of 400 to 6000, wherein R is a hydrocarbon radical remaining after removal of the carboxyl groups from terephthalic acid or isophthalic acid, and wherein D is a divalent radical remaining after removal of hydroxyl groups from 1,4-butanediol or 1,4-butenediol, provided that said short chain segments amount to 30 percent to 85 percent by weight of the copolyester.

2. The composition of Claim 1 wherein (A) is present in the amount of 76.5 to 99.5 weight percent, (B) is present in the amount of 0.5 to 3.5 weight percent, and (C) is optionally present in the amount of 0 to 20

weight percent.

3. The composition of Claim 1 or 2 wherein the phenoxy resin is present and is the reaction product of Bisphenol A and epichlorohydrin having a molecular weight of 5,000 to 35,000.

4. The composition of any of Claims 1-3 wherein the polyether glycol is a polyoxyalkylene glycol wherein the alkylene groups contain two to four carbon atoms.

5. The composition of Claim 4 wherein the polyether glycol is polyoxytetramethylene glycol having an average molecular weight of about 1000.

6. The composition of any of Claims 1-5 wherein the short chain segments amount to 45 percent to 65 percent by weight of the copolyester.

7. The composition of any of Claims 1-6 wherein 10 percent to 40 percent of the D groups represent divalent radicals remaining after removal of hydroxyl groups from 1,4-butenediol.

8. The composition of Claim 7 wherein 20 percent to 40 percent of the D groups represent divalent radicals remaining after removal of hydroxyl groups from 1,4-butenediol.

9. The composition of any of Claims 1-8 wherein the R groups are hydrocarbon radicals remaining after the removal of carboxyl groups from terephthalic acid.

10. The composition of any of Claims 1-8 wherein between 1 to 20 percent of R groups are hydrocarbon radicals remaining after removal of the carboxyl groups from isophthalic acid.

**Claims for the following Contracting State : GR**

1. A process for the production of an elastomeric composition comprising forming a blend of:

(A) 70 to 99.5 percent thermoplastic copolyester elastomer;

(B) 0.5 to 5 weight percent carbodiimide; and, optionally,

(C) 0 to 25 weight percent phenoxy resin, said weight percents being based on the total weight of (A), (B) and (C), wherein the copolyester elastomer comprises a multiplicity of recurring long chain ester units and short chain ester units joined head to tail through ester linkages, said long chain units being represented by the formula:

$$-OGO-\overset{\overset{O}{\|}}{C}\ R\ \overset{\overset{O}{\|}}{C}-$$

and said short chain units being represented by the formula:

$$-ODO-\overset{\overset{O}{\|}}{C}\ R\ \overset{\overset{O}{\|}}{C}-$$

wherein G. is a divalent radical remaining after the removal of the terminal hydroxyl groups from a polyether glycol having molecular weight in the range of 400 to 6000, wherein R is a hydrocarbon radical remaining after removal of the carboxyl groups from terephthalic acid or isophthalic acid, and wherein D is a divalent radical remaining after removal of hydroxyl groups from 1,4-butanediol or 1,4-butenediol, provided that said short chain segments amount to 30 percent to 85 percent by weight of the copolyester.

2. The process of Claim 1 wherein (A) is present in the amount of 76.5 to 99.5 weight percent, (B) is present in the amount of 0.5 to 3.5 weight percent, and (C) is optionally present in the amount of 0 to about 20 weight percent.

3. The process of Claim 1 or 2 wherein the phenoxy resin is the reaction product of Bisphenol A and epichlorohydrin having a molecular weight of 5,000 to 35,000.

4. The process of any of Claims 1-3 wherein the polyether glycol is a polyoxyalkylene glycol wherein the alkylene groups contain two to four carbon atoms.

5. The process of Claim 4 wherein the polyether glycol is polyoxytetramethylene glycol having an average molecular weight of about 1000.

6. The process of any of Claims 1-5 wherein the short chain segments amount to 45 percent to 65 percent by weight of the copolyester.

7. The process of Claim 1 wherein 10 percent to 40 percent of the D groups represent divalent radicals remaining after removal of hydroxyl groups from 1,4-butenediol.

8. The process of any of Claims 1-7 wherein the R groups are hydrocarbon radicals remaining after the removal of carboxyl groups from terephthalic acid.

9. The process of any of Claims 1-7 wherein between about 1 to about 20 percent of R groups are hydrocarbon radicals remaining after removal of the carboxyl groups from isophthalic acid.

10. The process of any of Claims 1-8 wherein the blend is formed by tumble blendings followed by melt compounding and extrusion in sheet form.